# EUROPEAN PATENT SPECIFICATION

(11) **EP 0 574 080 B1**
(45) Date of publication and mention of the grant of the patent: **10.03.1999**
(21) Application number: 93201596.9
(22) Date of filing: 04.06.1993
(51) Int. Cl.: H04L 12/40

(54) **Interface circuit between a microcontroller and a two-wire line with a peak detector in the receiving stage**
Schnittstellenschaltung zwischen einem Mikrokontroller und einer Zweidrahtleitung mit einem Spitzenspannungsdetektor in der Empfangsstufe
Circuit d'interface entre un microcontrôleur et une ligne à deux fils avec détecteur de crêtes dans l'étage de réception

(30) Priority: 12.06.1992 IT MI921455
(43) Date of publication of application: 15.12.1993
(73) Proprietor: BTICINO S.p.A., 20154 Milano (IT)
(72) Inventor: Novati, Daniele, I-21100 Varese (IT)
(74) Representative: Maggioni, Claudio

(56) References cited:
- DE-A- 3 601 243
- DE-A- 3 931 539
- US-A- 4 516 248

## Description

The present invention relates to systems for the transmission and reception of data in serial form through a two-wire data communication line to which a multiplicity of transmission and receiving stations is connected and, more particularly, to an interface circuit for interfacing between an electrical apparatus and a two-wire data communication line, as known from DE-A-3 601 243 and defined in the preamble of claim 1.

Various communication systems are known in which pieces of electrical apparatus interact with each other by the transmission and reception of data on a single two-wire line to which they are all connected in parallel. One such system consists of the complex of apparatus in an electrical system for an environment such as a habitation or workplace in which a multiplicity of control, signalling and actuating devices are connected to a line so as to activate electronic or electrical units selectively. In particular, each device and each unit of the system has an associated address which identifies its position, function and mode of operation. The actuating devices, for example push buttons or sensors, and the units to be actuated, for example relays or electronic switches for lamps, are connected to the line through interface circuits. These interface circuits are substantially all similar but include members which characterise them individually so as to identify the devices associated with them as well as their functions by means of a numerical value. These are, moreover, able to convert this numerical value into a train of pulses, to transmit this pulse train through the line, to receive similar pulse trains, to recognise and process the signals received and to output command and enabling signals.

An interface circuit must be able to process the signals received at its input electronically, amplifying them, freeing them from any noise and decoding them to obtain a datum in the form of a binary number for processing numerically in a suitable microcontroller.

US-A-4 516 248 discloses a data communication network with a variable threshold receiver. To compensate for d.c. voltages in a received data signal a threshold voltage is generated as the average of the peak signal levels present on the transmitting cable and the received data signal is compared with this threshold voltage. The result of the comparison is a signal containing the received date without line disturbance.

In order to enable the transmission of a large amount of data per time unit on the line, and hence to achieve a high speed in the exchange of information between the stations of the network, the pulses which constitute the signals and define the logic state of the bits must have a width which is as small as possible compatible with the capacity of the microcontroller to read them. The microcontrollers generally used in these applications have serial inputs and outputs which work with bit times of about one hundred microseconds and require pulses of at least twenty microseconds. In order for pulses which are so short to be detected correctly, it is necessary for the microcontroller to be able to carry out an interrupt procedure, that is, to have a so-called "interrupt" function. As is known, in this process, the central processing unit of the microcontroller reacts to the state of one of its "interrupt" inputs by suspending the carrying out of the main program to execute or to store the function associated with that input. Obviously microcontrollers of this type are more expensive than others which do not have this function.

The object of the present invention is to provide an interface circuit of the type defined above which can function correctly with a microcontroller which does not have the interrupt function.

This object is achieved according to the invention by an interface circuit as defined and characterised in claim 1.

The invention will be better understood from the following detailed description of one embodiment thereof given by way of non-limiting example in relation to the appended drawing in which the single figure is a simplified schematic diagram of the interface circuit of the invention.

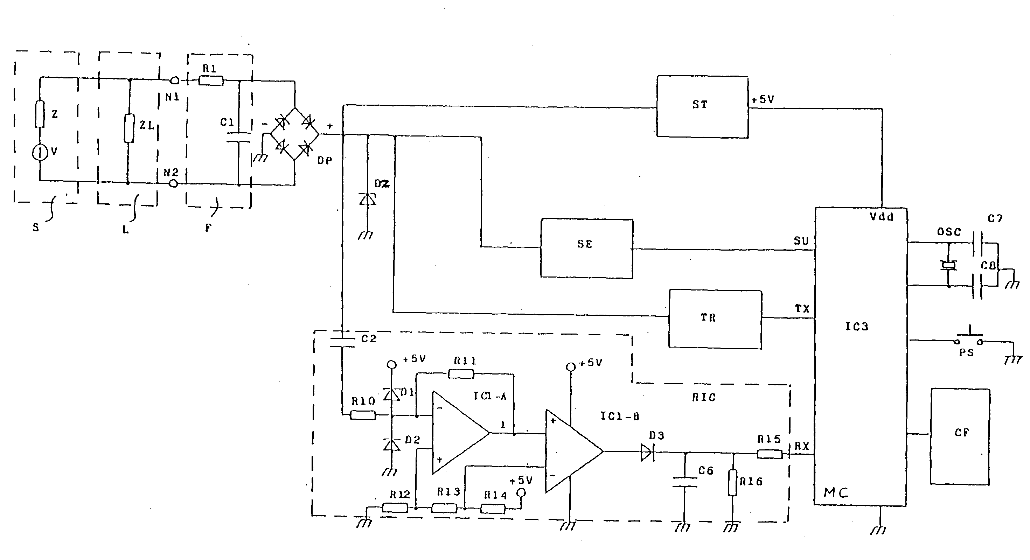

The schematic drawing of Figure 1 shows an interface circuit which can transmit and receive data in serial form on a two-wire line L. A plurality of receiving/transmitting stations, not shown, of an electrical system, each of which has a similar interface circuit is connected in parallel to this line. It will be seen that the drawing shows in some detail only those parts which have direct pertinence to the invention in order not to complicate the drawing and the description unnecessarily.

The various interface circuits are supplied through the line L having an impedance ZL from a DC supply S represented by a generator V in series with its internal impedance Z. Typically, the voltage of the supply S is between 20V and 30V.

The supply and input/output terminals of the interface circuit, indicated N1 and N2, are connected through a filter stage F represented by a series resistor R1 and a parallel capacitor C1 to a diode bridge circuit DP. The function of the latter is to establish the polarity of the supply of the circuit so as to render it independent of the polarisation of the line L. The negative output terminal of the bridge DP is connected to the earth of the circuit while its positive terminal is connected to a Zener diode DZ, whose function is to protect against overloads on the line, to a generator stage ST for generating a stabilised voltage Vdd, typically 5V, for supply to a microcontroller MC, to a transmission stage TR for transmitting signals coming from an output terminal TX of the microcontroller MC, to a receiving stage RIC for receiving signals present on the line L and intended for a serial-data input terminal RX of the microcontroller MC, and to a signalling stage SE connected to an output SU of the microcontroller MC. The microcontroller MC is also connected to components for fixing the clock frequency, represented by a quartz oscillator OSC and by two capacitors C7 and C8, and to a structure CF for defining parameters which characterise the microcontroller for the purpose of identifying the particular interface circuit and for determining the function which it is intended to carry out. A well known structure of this type includes "configurators" in the form of microswitches which may be set open or closed so as together to define a series of logic states which represent a predetermined binary number. The microcontroller MC also has an input terminal connected to command apparatus, in this example a push button PS. In the case of a receiving station interface, that is relating to apparatus to be actuated, the microcontroller has instead an output terminal which is connected to the apparatus through a suitable command stage.

The receiving stage RIC is coupled to the line L through a capacitor C2. This latter is connected through a limiting resistor R10 to the inverting input of an operational amplifier IC1-A and to an amplitude limiter constituted by two diodes D1,D2 connected in series between the terminals for supplying the stabilised voltage Vdd = 5 volts, in the conducting sense shown, so as to limit the amplitude of the pulses to be applied to the input of the amplifier ICl-A to a predetermined value, for example 1 volt. The amplifier IC1-A has its non-inverting terminal connected to a fixed reference voltage determined by the drop across a resistor R12 of a voltage divider R12, R13, R14, also connected between the stabilised supply terminals.

The gain of the operational amplifier IC1-A is fixed by a resistor Rll inserted between the inverting input terminal and the output terminal of the amplifier itself. This latter terminal is connected to the non-inverting input of a further operational amplifier IC1-B which has a comparator function, to the inverting input of which is supplied another reference voltage fixed by the voltage drop across the resistors R12, R13 of the divider R12, R13, R14. The comparator IC1-B compares the pulses amplified and inverted by the amplifier IC1-A with the reference voltage (about 1 volt) so as to let pass, and output, only those pulses which have an amplitude greater than the threshold voltage and which thus eliminates any noise associated with the signal. These output pulses are applied to the input of a peak detector stage constituted by a diode D3 and a capacitor C6. The output of the peak detector is connected to an input terminal RX of the microcontroller MC through a resistive adaptor constituted by two resistors R15, R16 in series.

Due to the effect of the peak detector, the short duration pulses (20-30 microseconds) of the signal may be detected by the microcontroller during its normal cycle time. This is possible because the capacitor C is charged by a pulse and is kept charged until the microcontroller has detected its state of charge during its reading cycle. After this, the input RX is brought to its low impedance state, causing the capacitor to be discharged and thus returning the circuit to the initial conditions for the receipt of the subsequent pulse. The values of the components are chosen so that one pulse is able to charge the capacitor C6 to a voltage higher than 3V and this condition of charge remains substantially unchanged for an entire bit time (typically about 100 microseconds) of the microcontroller.

Thus an extremely simple and effective interface circuit is obtained which, while using a low cost microcontroller without the "interrupt" function, is perfectly able to handle data transmitted in pulses much shorter than the bit time of the microcontroller.

With regard to the operation of the interface circuit in its entirety, in the example shown, the operation of the push button PS starts a program cycle of the microcontroller MC and, specifically:
- the reading of the identification and function code associated therewith, that is the reading of the logic states defined by the configuration structure CF,
- the transmission of the code by successive variations in the state of impedance of the terminal TX and the application of a corresponding series of pulses to the line L by means of the transmission stage TR,
- the periodic reading of the logic state of the receiving terminal RX to check for the existence of signals on the line,
- the comparison of these signals with the code transmitted and
- the activation of the signalling device SE if the signal received includes identification and enabling data showing that the electrical apparatus associated with the push button PS has been actuated.

## Claims

1. An interface circuit for interfacing between an electrical apparatus (PS) and a two-wire data communication line (L) for transmitting and receiving data in serial form, to be received from the line or to be sent on the line respectively, said interface circuit including a microcontroller (MC) having a data input terminal (RX) and a data output terminal (TX) and further including receiving circuit means (RIC) and transmission circuit means (TR) for connecting the input and output terminals respectively to the line (L), characterised in that the receiving circuit means (RIC) include a peak detector (D3, C6) having its output connected to the data input terminal (RX) and is so designed as to keep a data level thereon substantially unchanged for a bit time of the microcontroller (MC).

2. A circuit according to Claim 1, characterised in that the receiving circuit means (RIC) also include an amplifier stage (IC1-A) and a noise reduction stage (IC1-B) connected in cascade between the line (L) and the peak detector (D3, C6).

3. A circuit according to Claim 2, characterised in that the noise reduction stage includes a comparator (IC1-A) having a first input connected to the output of the amplifier stage (IC1-A) and a second input connected to a voltage reference source (R12, R13).

4. A circuit according to any one of the preceding claims for use in a system in which the supply voltage of the circuit is supplied through the line (L), characterised in that it includes a diode bridge (DP) inserted between the line (L) and the input of the circuit.

## Patentansprüche

1. Eine Schnittstellenschaltung zum Vorsehen einer schnittstellenmäßigen Verbindung zwischen einer elektrischen Vorrichtung (TS) und einer Datenkommunikationszweidrahtleitung (L) zum seriellen Übertragen und Empfangen von Daten, die von der Leitung empfangen bzw. auf die Leitung gesendet werden sollen, wobei die Schnittstellenschaltung eine Mikrosteuerungseinrichtung (MC) mit einem Dateneingangsanschluß (RX) und einem Datenausgangsanschluß (TX) und ferner eine Empfangsschaltungseinrichtung (RIC) und eine Übertragungsschaltungseinrichtung (TR) zum Verbinden der Eingangs- bzw. Ausgangsanschlüsse mit der Leitung (L) aufweist, dadurch gekennzeichnet, daß die Empfangsschaltungseinrichtung (RIC) eine Spitzenerfassungseinrichtung (D3, C6) aufweist, deren Ausgang mit dem Dateneingangsanschluß (RX) verbunden ist, und die derart entworfen ist, um einen Datenpegel an derselben für eine Bit-Zeitdauer der Mikrosteuerungseinrichtung (MC) im wesentlichen unverändert zu halten.

2. Eine Schaltung gemäß Anspruch 1, die dadurch gekennzeichnet ist, daß die Empfangsschaltungseinrichtung (RIC) ferner eine Verstärkerstufe (IC1-A) und eine Rauschreduzierungsstufe (ICl-B) aufweist, die in einer Kaskade zwischen die Leitung (L) und die Spitzenerfassungseinrichtung (D3, C6) geschaltet sind.

3. Eine Schaltung gemäß Anspruch 2, die dadurch gekennzeichnet ist, daß die Rauschreduzierungsstufe einen Komparator (IC1-B) aufweist, dessen erster Eingang mit dem Ausgang der Verstärkerstufe (ICl-A) verbunden ist, und dessen zweiter Eingang mit einer Referenzspannungsquelle (R12, R13) verbunden ist.

4. Eine Schaltung gemäß einem der vorhergehenden Ansprüche, für eine Verwendung in einem System, bei dem die Versorgungsspannung der Schaltung über die Leitung (L) zugeführt wird, dadurch gekennzeichnet, daß dieselbe eine Diodenbrücke (DP) aufweist, die zwischen die Leitung (L) und den Eingang der Schaltung eingefügt ist.

## Revendications

1. Circuit d'interface pour assurer l'interface entre un appareil électrique (PS) et une ligne de communication de données à deux fils (L) pour émettre et recevoir des données en série, respectivement devant être reçues à partir de la ligne ou devant émises sur la ligne, ledit circuit d'interface comprenant un microprocesseur (MC) possédant une borne d'entrée de données (RX) et une borne de sortie de données (TX) et comprenant, de plus, un moyen de circuit de réception (RIC) et un moyen de circuit d'émission (TR) pour raccorder les bornes d'entrée et de sortie respectivement à la ligne (L), caractérisé en ce que le moyen de circuit de réception (RIC) comprend un détecteur de pic (D3, C6) dont la sortie est connectée à la borne d'entrée de données (RX) et est conçu de façon à maintenir un niveau de données sensiblement invariable pendant un temps binaire du microprocesseur (MC).

2. Circuit selon la revendication 1, caractérisé en ce que le moyen de circuit de réception (RIC) comprend, de même, un étage d'amplificateur (IC1-A) et un étage de réduction de bruit (IC1-B) montés en cascade entre la ligne (L) et le détecteur de pic (D3, C6).

3. Circuit selon la revendication 2, caractérisé en ce que l'étage de réduction de bruit comprend un comparateur (IC1-A) possédant une première entrée connectée à la sortie de l'étage d'amplificateur (IC1-A) et une seconde entrée connectée à une source de référence de tension (R12, R13).

4. Circuit selon l'une quelconque des revendications précédentes pour une utilisation dans un système dans lequel la tension d'alimentation du circuit est fournie par l'intermédiaire de la ligne (L), caractérisé en ce qu'il comprend un pont de diodes (DP) inséré entre la ligne (L) et l'entrée du circuit.
